# EUROPEAN PATENT SPECIFICATION

(11) **EP 2 814 790 B1**
(45) Date of publication and mention of the grant of the patent: **02.01.2019**
(21) Application number: 13703610.9
(22) Date of filing: 12.02.2013
(51) Int. Cl.: C04B 41/50, C04B 41/52

(54) **HIGH PERFORMANCE BIODEPOSITION FOR STRENGTHENING OF MATERIALS**
HOCHLEISTUNGS-BIOABLAGERUNG FÜR DIE STÄRKUNG VON MATERIALIEN
BIODÉPÔT HAUTE PERFORMANCE POUR LE RENFORCEMENT DE MATÉRIAUX

(30) Priority: 13.02.2012 EP 12155132
(43) Date of publication of application: 24.12.2014
(73) Proprietor: Universiteit Gent, 9000 Gent (BE)
(72) Inventor: DE MUYNCK, Willem, B-9950 Waarschoot (BE)
(74) Representative: Jacobs, Philippe
(86) International application number: PCT/EP2013/052783
(87) International publication number: WO 2013/120847

(56) References cited:
- DE MUYNCK W ET AL: "Influence of pore structure on the effectiveness of a biogenic carbonate surface treatment for limestone conservation", APPLIED AND ENVIRONMENTAL MICROBIOLOGY OCTOBER 2011 AMERICAN SOCIETY FOR MICROBIOLOGY USA, vol. 77, no. 19, October 2011 (2011-10), pages 6808-6820, XP002679842, DOI: DOI:10.1128/AEM.00219-11 cited in the application
- TIANO P ET AL: "Biomediated reinforcement of weathered calcareous stones", JOURNAL OF CULTURAL HERITAGE, EDITIONS SCIENTIFIQUES ET MEDICALES ELSEVIER, AMSTERDAM, NL, vol. 7, no. 1, 1 January 2006 (2006-01-01) , pages 49-55, XP028072759, ISSN: 1296-2074, DOI: 10.1016/J.CULHER.2005.10.003 [retrieved on 2006-01-01] cited in the application

## Description

### Technical field of invention

The present invention relates to the ureolytic deposition of carbonate on and inside limestone for strengthening purposes. The latter process is known as biodeposition. More specifically, the invention relates to the usage of submicron sized calcium carbonate particles, urea, calcium salts and urease with the aim of improving the extent and depth of strengthening while at the same time decreasing the formation of undesirable by-products, such as ammonium, which are associated with biodeposition.

### Background art

Microorganisms can induce the precipitation of carbonate in a variety of ways including the formation of metabolic products, affecting the saturation state of the solution, producing nucleation sites, and/or catalyzing the nucleation reaction (Castanier et al. 1999; Hammes and Verstraete 2002). The latter can be attributed to the physical and chemical characteristics of the cell wall. Microorganisms can increase the saturation state of a given system by means of an increase of the concentration of dissolved inorganic carbon, an increase of the pH or a combination thereof. An example of such a process is the hydrolysis of urea. This process presents several advantages over the other carbonate generating processes as it can be easily controlled and has the potential to produce high amounts of carbonate within a short period of time (De Muynck et al. 2010). Evidence of microbial involvement in carbonate precipitation has led to the exploration of this process in the field of construction materials. An example of such a process is the protection of ornamental stone by means of a microbiologically deposited carbonate layer, i.e. biodeposition. The protective and consolidative effects of this treatment both rely on the presence of biogenic carbonate, mainly calcium carbonate. These biogenic crystals may form a protective layer on the surface, decreasing the uptake of water and noxious components, and act as cementing layer between the grains of the stone, increasing its cohesion and strength (Rodriguez-Navarro et al. 2003; De Muynck et al. 2010).

EP0388304 discloses a process intended for the protection and/or treatment of an artifical surface by virtue of a surface coating, in which the coating is produced *in situ* by mineralizing microorganisms (= the so-called 'Calcite Bioconcept Treatment'). However, Le Metayer-Levrel et al. (1999) clarified that the latter process resulted in very limited strengthening given the limited thickness of the biocalcin layer (2-3 µm). De Muynck et al. (2010), attributed this limited thickness to the concentration of calcium salt used, which in its turn depends on the type of microorganism and metabolic pathway used. Another disadvantage of the Calcite Bioconcept Treatment is the long time required for carbonate precipitation to occur. Indeed, the Calcite Bioconcept Treatment is applied over five or ten days, with spraying of the medium every 24 hours and 48 hours, respectively (Le Metayer-Levrel et al. 1999).

WO 2008/009771 A1 discloses a process for protecting and reinforcing construction and ornamental materials via the formation of calcium carbonate induced by natural microorganisms already present in the construction material. A product is applied to the surface of the material which results in the selective activation of the natural, carbonatogenic microorganisms present inside the stone. However, the strengthening effect obtained by this process is limited as is clear from laboratory and test reports. Indeed, Jimenez-Lopez et al. (2008) reported for example that new cement was observed only at a depth of about 3 mm. Jroundi et al. (2010) further reported a superficial strengthening as observed from peeling tape tests.

Due to the long time period required for the activation of the natural, microbial community, Jimenez-Lopez et al. (2007) proposed the additional use of *Myxococcus xanthus.* However, this additional use did not result in a higher strengthening *in situ* and cementation was only observed to a depth of several hundred micrometers. In addition, the treatment has to be applied by spraying during a period of 7 days and two applications each day. Furthermore, because of the slow rate of carbonate production, the stone needs to remain moist for several days in order not to impair the microbial activity (Jroundi et al. 2010).

De Muynck et al. (2011) obtained considerable strengthening with a ureolytic-based biodeposition treatment. However, given the application procedure used, i.e. full saturation by means of complete immersion, the penetration depth of the treatment was still very limited (up to 5 mm). Moreover, the high concentrations of urea used resulted in high concentrations of ammonium inside the stone.

To summarize, the biodeposition treatments for building materials described so far, are characterized by a limited strengthening and/or limited penetration depth and/or high concentrations of undesirable by-products.

Besides the deposition of a layer of carbonate on the surface of building materials, microbial induced carbonate precipitation has also been used for the generation of binder-based materials (see review paper by De Muynck et al. (2010)).

WO2006/066326 A1 refers to a method of forming a high strength cement in a permeable starting material comprising the step of combining the starting material with effective amounts of a urease producing microorganism, urea and calcium ions wherein the effective amount of the urease producing organism provides a urea hydrolysis rate of 0.5-50 mM urea hydrolyzed.min⁻¹. However, this process results in high amounts of ammonium which is not only undesirable from an environmental point of view but can also result in nitric acid production (upon nitrification), and hence, damage to a building material such as stone. The precipitated calcium carbonate crystals have been reported to have submicron dimensions (Al-Thawadi et al. 2011).

As a way to prevent the formation of ammonia, EP 1978100 discloses the usage of a microbiologically oxidisable organic carbon source, an electron acceptor and a suitable counter ion for carbonate production. In this process, carbonate production occurs as a result of the oxidation of the organic carbon source rather than from the hydrolysis of urea. While the potential of the process has been proven, its effectiveness is much lower compared to the urea driven process both in strengthening effect and time of treatment required.

US2010/0086367 further discloses a method for improving the strength of a porous or permeable material via increasing attachment of bacteria to the substrate. For this purpose, calcification bacteria are brought into contact with an (organic) adhesion agent which might be assimilated by the bacteria. This process is of interest in these applications where bacteria may be flushed out of the porous media by subsequent applications of calcifying medium, especially when the medium is applied under pressure or by percolation (e.g. strengthening of soil).

WO 2007/069884 A1 relates to a method for immobilizing bacteria in a material permeable to bacteria, comprising the addition of an affective amount of a flocculating agent to the material, wherein the flocculating agent is selected from the group consisting of divalent cations.

However, both immobilization processes mentioned above did not result in a decrease of the amount of urea required, and hence, a decrease in the ammonium production.

In addition to bacteria, urease enzyme has also been used for the precipitation of calcium carbonate:
US2012/0269584 A1 refers to a method for water tightening of water bearing zones and stabilization of sand in underground constructions by precipitation of at least one material, by introducing at the least one aqueous solution of salts comprising calcium ions and urea and a urease enzyme. The urease may be plant or bacteria based, and is obtained in solid form by lyophilization of the filtrate of ground plants or bacterial solution.

Urease has been immobilized on nanoparticles for several purposes, e.g. for slow release fertilizer (Kottegoda 2011) and for use in bioreactors (Liang et al. 2005). Thus far, however, no reports are available on the use of nanoparticles and urease for the protection and strengthening of stone.

In summary, there is no efficient ureolytic biodeposition method available resulting in rapid and deep strengthening of materials and a low production of undesirable side products, which is especially of importance for conservation and restoration purposes.

Calcium based nanoparticles or submicron sized particles have been used for the strengthening of building materials by means of (re)introducing calcite into the pores. Depending of the type of salt used, the nanoparticles were used for different purposes:
- Giorgi and Baglioni (2000) used dispersions of lime nanoparticles in alcohol for the consolidation of wall paintings. The purpose of their method was to overcome the disadvantages of the traditional lime water method, i.e. poor solubility and fast sedimentation rate resulting in high number of applications required. Upon reaction of the lime nanoparticles with CO₂ from the air, calcite crystals are formed in the pores.
- Larson et al. (2000) combined the use of colloidal calcite (= calcite nanoparticles) with lime in order to decrease the number of applications and drying time required with the lime water treatment. Carbonate ions were supplied by means of a carbon dioxide gas flow.
- Tiano et al. (2006) used calcite nanoparticles to maintain a saturated carbonate solution in the pores of a calcareous stone. A controlled growth of calcite crystals in the pores was obtained by using natural and synthetic polypeptides (Biolnducing Macromolecules, BIM). Calcium and carbonate ions were supplied by means of a saturated solution of calcium bicarbonate supplemented in some cases with calcite nanoparticles.

The strength obtained with these nanoparticles treatments were, however, limited to the outer surface. From drilling resistance measurements, it could be observed that the strengthening obtained with BIM and calcium carbonate was limited to the first 2 mm on Pietra d'Angera (bioclastic stone with 18% porosity) and only amounted about 10% (2006). Slížková et al. (2010) indicated that the effect of a consolidation treatment with calcium hydroxide nanoparticles on Maastricht limestone (limestone with 40% porosity) was limited to about 10 mm, as observed with ultrasonic velocity measurements.

Silica based nanoparticles have been used to improve the properties of traditional silicium based surface treatments such as consolidants(Miliani et al. 2007; Kim et al. 2009) and water repellents (de Ferri et al. 2011). However, no reports are available on the use of silica based nanoparticles and bacteria for the protection and strengthening of natural stone.

Several authors reported on the aggregation of bacteria by nanoparticles. In their study on interactions between bacteria and hydroxyapatite, Venegas et al. (2006) observed co-aggregation of hydroxyapatite nanoparticles and bacterial cells. Larsen et al. (2009) investigated the aggregation of bacteria by chitosan nanoparticles as a method for pathogen detection and flocculation of bacteria in fermentation processes. Similarly, Luo et al. (2005) investigated the use of polymeric nanoparticles as antibacterial agents. Ataee et al. (2011) recently cautioned on the antibacterial effect of calcium carbonate nanoparticles and recommended the use of these nanoparticles as an anti-microbial agent in different fields of medicine, food industry and agriculture.

Hence, no carbonate based surface treatments (i.e. biodeposition treatments) have yet been described that result both in strengthening at high depths (up to a depth of at least 5 mm or more) and a decrease in the amount of by-products produced. Furthermore, the usage of submicron sized particles to promote the retention/immobilization of urease inside porous materials has not been reported before.

The present invention provides particular methods or processes of treating limestone based on the usage of submicron sized calcium carbonate particles, urea, calcium salts and urease (microbial and/or non-microbial) which result in: a) an improved retention/immobilization of said urease inside said material, b) a remarkable increase in strength at low and high depths of said materials and c) a decrease in the amount of undesirable by-products in said materials.

### Brief description of figures

Fig. 1. Influence of the application procedure, dosage of CaCO₃ precursors (left) and CaCO₃ nanoparticles (right) on the water absorption of biodeposition treated Maastricht limestone.
Fig. 2. Differential hardness profiles¹ of biodeposition treatments with microbial urease on Maastricht limestone.
Fig. 3. Differential hardness profiles¹ of biodeposition treatments with non-microbial urease on Maastricht limestone.
Fig 4. Differential drilling resistance profiles of a biodeposition treatment with nanoparticles and a conventional consolidant on Maastricht limestone
Fig 5. Strength increase of Maastricht limestone in function of depth for biodeposition treatments with two different types of nanoparticles.
Fig 6. Strength increase of Maastricht limestone in function of depth for biodeposition treatments with increasing amounts of nanoparticles.
Fig 7. Ammonium profiles for stones treated with 100ml, 150ml and 250 ml of 1 M NH₄Cl (Reference series) followed by equal volumes of a Ca(OH)₂ nanoparticles solution (NP series).

### Description of invention

Remarkably, the present invention discloses that the combined use of submicron sized calcium carbonate particles and ureolytic carbonate precipitation allows for a higher protection and strengthening with a smaller amount of material deposited inside limestone (and hence, less unwanted by products such as ammonium salts) compared to the sole use of submicron sized particles or ureolytic carbonate precipitation.

It is thus an object of the invention to provide a method for forming a protective layer on limestone and to strengthen the limestone at low and high depths without introducing high amounts of by-products inside the materials.

It is further an object of the invention to increase the retention/immobilization of the urease (microbial and/or non-microbial) to the materials to be treated, with the aim of improving the effectiveness of the above-described methods. The retention of said urease in the material is promoted by aggregation of the microbial cells containing said enzyme inside the pore structure upon contact with the submicron sized calcium carbonate particles or immobilization of said urease enzyme on the submicron sized particles.
Therefore, the present invention relates to a method for improving the durability of limestone comprising providing at least once said limestone with submicron sized calcium carbonate particles, urea, calcium salts and urease (microbial and/or non-microbial) in order to obtain a deposition of calcium carbonate and submicron sized particles on and inside said material. A drying period after said provision of said submicron sized particles, urea, calcium salts or urease may be included in the latter method.
In the present invention the expression "improving the durability" or "strengthening" means reinforcing or consolidating limestone, by means of increasing the cohesion between the particles of the porous material. The consolidation effect is preferably measured by means of drilling resistance measurements, since this allows evaluation of the spatial distribution of the strengthening. In the present invention, strengthening mainly refers to a statistically significant (P < 0.05) strength improvement up to depths of at least 5 mm, as measured from statistically significant increased drilling resistance values. The term 'at least 5 mm' refers to a depth of 5, 6, 7, 8, 9, 10, 11, 12, 13, 13, 14, 15, 16, 17, 18, 19, 20, 21, 22, 23, 24, 25, 26, 27, 28, 29, 30,..., 35,..., 40,...,45,..., or more mm.
The term 'limestone' refers to permeable material composed of particles and containing pores with a diameter of at least 1 µm in between said particles. An example of limestone is Maastricht limestone. Hence, the present invention relates to methods as described herein wherein said porous material is limestone.
The term 'submicron sized particles' refers to submicron sized objects with dimensions between 1 and 1000 nanometer (including nanoparticles with dimensions between 1 and 100 nm).

Preferably, the concentration of the submicron sized particles in solution is as high as possible in order to restrict the amount of liquid that needs to be applied to the stone, while not preventing a good penetration inside the porous material.
The term 'providing' relates to any manner to deliver or feed the limestone of the invention with submicron sized calcium carbonate particles, urea, calcium salts and urease (microbial and/or non-microbial). 'Providing' refers for example to applying, pouring, spraying and the like of, preferably, a paste, a liquid or solution comprising at least one of said submicron sized particles, urea, calcium salts and urease. The latter solutions may thus contain any combination of submicron sized particles, urea, calcium salts and/or urease such as: a) submicron sized particles, or b) submicron sized particles and urea, or c) submicron sized particles, urea and calcium salts, or d) submicron sized particles, urea, calcium salts and urease (microbial and/or non-microbial) or e) urea, or f) urea and calcium salts, or g) urea and calcium salts and urease, or h) calcium salts, or i) calcium salts and urease or j) urease.

The terms 'providing at least once said limestone with submicron sized particles, urease (microbial and/or non-microbial),urea and calcium salts' indicate that any paste (gel or poultice) or solution containing at least one of the four above indicated components (the submicron sized particles, urease, urea and calcium salts) should be applied at least once (i.e. 1, 2, 3, 4 or more applications) to said material. After the application of any of the above-described paste or solution a drying period might be provided. Said 'drying period' refers to any time period (1/2, 1, 2, 3 or more hours, or, 1, 2, 3 or more days) allowing the treated material to evaporate water and thus to become partially or completely dry. Said evaporation can occur under natural conditions or via additional heating or any other means.

Examples of such application procedures, as also described in the 'Examples section', include the addition of bacteria solutions and CaCO₃ precursors solutions on different times (i.e. different days or different times of the day), e.g. a second application of bacteria and CaCO₃ precursors seven days after the first application and for which a time interval of one hour was taken between application of the bacteria and precursor solution.

The term 'precursors' as used herein refers to urea and calcium salts, that upon hydrolysis of urea give rise to the precipitation of carbonate. More specifically 'CaCO₃ precursors' refer to urea and calcium salts, such as calcium chloride.

The submicron sized particles improve the retention of the microorganisms and isolated enzymes to the porous material due to aggregation of the cells (microorganisms) and adsorption/encapsulation of the enzyme, respectively, while in the meanwhile act as a filler for the biogenic carbonate cement produced by the hydrolysis of urea. Moreover, they may act as a source of calcium ions. Metabolization (hydrolysis) of urea will result in the formation of ammonium and (bi)carbonate. Said (bi)carbonate will, in the presence of calcium ions derived from the calcium salts or from the submicron sized calcium carbonate particles, result in the production of calcium carbonate which will increase the cohesion of the particles of the porous material. The present invention relates to the method as described wherein said submicron sized particles are calcium carbonate particles that are converted to calcium carbonate upon reaction with the biogenic carbonate. In case negatively charged nanoparticles are being used, they can also be applied together with the microorganism. Aggregation of the nanoparticles and microorganisms in the porous material will then occur upon contact with the metal salt.

Said submicron sized calcium carbonate particles, urea, calcium salts and urease (microbial and/or non-microbial) are dosed so that a sufficient amount of calcium carbonate is produced or present within said material. More in particular said submicron sized particles, urea, calcium salts and urease (microbial and/or non-microbial) are dosed in such a way that the volume of the deposited material (= carbonates and submicron sized particles) amounts at least 1% (i.e. 1, 2, 3, 4, 5,..., 10,..., 15,..., 20 or more %) of the total pore volume of the part of the material or stone (which equals then 100%) that needs to be strengthened. Concerning the submicron sized particles, the present invention specifically relates to a method as described above wherein said submicron sized particles are inorganic particles such as calcium salt precipitates which are dosed in such a way that they maximally account for 95% (i.e. 5, 10, 20, 30, 40, 50, 60, 70, 80, 90, 91, 92, 93, 94, or 95%) of the weight of the deposited material (= calcium carbonate and submicron sized particles) on and inside said material.

For the calculation of the amount of calcium salts and submicron sized particles (g.m⁻²) that needs to be applied to the stone for a desired percentage of precipitation (i.e. volume of material per pore volume as described above) the following method can be applied:
- The depth of the zone that needs to be consolidated (in meter) can be determined by means of DRMS measurements (or any other method known) or taken arbitrarily. The porosity of the stone is known from the art or can be measured from mercury intrusion or water saturation measurements or any other method known. From these two values, one can calculate the pore volume to be treated per unit of surface area (i.e.m³.m⁻²).
- From the value above (m³.m⁻²), the desired percentage of precipitation (m³.m⁻³) and the volumetric density of the precipitate (e.g. 2710 kg.m⁻³ for CaCO₃), one can calculate the amount of material (calcium carbonate) that needs to be applied per unit of surface area (i.e. kg.m⁻²). Up to 95% of this amount can be supplied as submicron sized particles (calcium carbonate) while the remaining part has to come from urea and e.g. calcium salts. The liquid has to be dosed in such a way, that the submicron sized particles, urea, calcium salts and urease (microbial and/or non-microbial) can reach the desired depth by capillary water absorption and/or diffusion.

- Urea should be dosed in such a way that all calcium salts can be precipitated, preferably urea is added in equimolar concentrations as the calcium salt.
- Urea and calcium should be dosed in such a way that the final concentrations are not toxic for the microorganisms or become inhibitory for urease activity.
- In order to obtain the desired result (depth and amount of precipitation), several application procedures (number of applications, amount of submicron sized particles used (% of total amount of material to be deposited), amount of liquid (l.m⁻²) and concentrations of calcium salts and submicron sized particles (g.l⁻¹)) are possible. However, these procedures should obey to the restrictions mentioned above. Preferably, the number of applications and the amount of liquid applied to the stone should be kept as low as possible, while the amount of submicron sized particles (%) should be as high as possible.
- Additionally, the amount of urease (microbial and/or non-microbial) to be applied should be in correspondence with the amount of urea that needs to be hydrolyzed. Higher amounts of urea added, require higher amounts of urease for complete conversion of all urea to occur. Microorganisms may be provided as separate liquid culture The amount of unwanted components inside this liquid culture should be as low as possible. Preferably, the concentrations of ammonia should be kept as low as possible while not interfering with microbial growth. Alternatively, microbial cultures may be centrifuged and resuspended in a solution free of ammonium, e.g. the calcium salts solution. Furthermore, microorganisms may be provided as powders (lyophilized cells and/or spores) that can be added to the calcium salt, urea and/or submicron sized particles solution. Urease may be provided as powder or liquid suspension.

The present invention also relates to calcium hydroxide particles. In this regard, the present invention relates to a method as described wherein said calcium hydroxide particles are applied to said limestone after microbial activity has ceased (i.e. about one week after the last addition of microorganisms and/or urea and calcium salts). The purpose of this 'polishing' step is to remove the ammonium present inside the stone (by means of conversion to ammonia, and subsequently, evaporation to the atmosphere) and to kill any microbial cells that may have survived the precipitation process.

In another embodiment, calcium hydroxide particles are applied to said porous materials before application of the microorganisms. The purpose of this method is to provide a filler material. For hydrolysis of urea to occur, the calcium hydroxide particles need to be converted to calcium carbonate particles first. The latter can be obtained by natural carbonation (long process) or by means of the use of alkaliphilic bacteria as described in WO 2010130712.

The term 'by-products' (alternatively side-products) as used herein refers to any compound other than the carbonates and the submicron sized particles such as for example ammonium chloride, acetate, remains from the bacterial culture liquid (proteins) which may serve as a food source for the growth of (unwanted) microorganisms or which may give rise to salt damage etc...

The term 'ureolytic microorganisms' refers to microorganisms capable of inducing precipitation of biogenic carbonate and capable to hydrolize urea such as B. *sphaericus,* some alkaliphilic and alkalitolerant bacteria...

The term 'microbial urease' refers to urease enzymes found in microorganisms such as bacteria, fungi, algae. Different formulations of microbial urease can be used, i.e. intra- or extracellular urease associated with living or dead microorganisms, or crude and purified enzyme extracts.

The term 'non-microbial urease' refers to urease enzymes found in plants, invertebrates or vertebrates. Different formulations of non-microbial urease can be used, associated with cells, crude and purified extracts. Examples of crude extracts are bean extracts such as Jack Bean meal extract.

The present invention thus specifically relates to a method as described above wherein said microorganism is a microorganism capable of hydrolyzing urea such as *Bacillus sphaericus* or *Sporosarcina pasteurii* or wherein said non-microbial urease is Jack Bean meal extract. The terms 'urea', 'hydrolyzing urea', 'carbonate', 'microbial carbonate precipitation' and 'biodeposition' are described and explained in detail in De Muynck et al. (2010).

Disclosed is also a strengthened porous material obtainable by a method as described herein wherein the strength of said material is significantly higher when compared to the strength of the same material which has not been treated as described herein.

The present invention will now be illustrated by the following non-limiting examples.

### Examples

### 1. Materials

### 1.1. Limestone

Maastricht stone is a soft limestone with a total porosity up to 47% and a low compressive strength (3-5 N.mm⁻²). Its softness enables a clear evaluation of a strengthening effect. Prior to the experiments, cubes of 10 cm side were dried at 80°C until constant weight (a weight change less than 0.1% between two measurements at 24 h intervals). Then, all sides were covered with aluminum foil, except the one to be treated, to ensure that evaporation of water could only occur through the treated side. The foil was applied in such a way that it reached 2 cm above the surface that had to be treated. As such, loss of liquid during pouring was prevented.

### 1.2. Microbial urease

*Bacillus sphaericus* LMG 22557 (BCCM, Ghent) was used as source of microbial urease for this study. Selection of this spore-forming strain was based on results obtained in previous work (Dick et al. 2006). Culture media consisted of 13 g.l⁻¹ nutrient broth, 10 g.l⁻¹ ammonium chloride, brought to a pH of about 8.5 by the addition of sodium hydroxide before autoclaving. Liquid media were sterilized by autoclaving for 20 min at 120°C. For all experiments, *B*. *sphaericus* cultures were obtained after subsequent culturing (two times and 1% inoculum) from a stock culture conserved at -80°C. Cultures were incubated for 24 h at 28°C on a shaker at 100 rpm. Culturing was performed under sterile conditions. Cultures were used as such or as pellets resuspended in saline (7 g.l⁻¹ calcium chloride) after centrifugation (10min, 5000 rpm, Sorvall RC6+)

Freeze dried cells of *Sporosarcina pasteurii* LMG 7130 (BCCM, Ghent) were used as a source of crude urease enzyme. While a lot of bacterial cells were killed upon freeze drying, urease activity remained more or less unaffected. *Sp. pasteurii* was grown in culture medium consisting of 20 g.L⁻¹ yeast extract and 20 g.L⁻¹ urea. 24 h old cultures of *Sp*. *pasteurii* were centrifuged for 10 min at 5000 rpm (Sorvall RC6+). Next, the pellets were stored in a freezer at -20°C for 24 hours. Subsequently, the pellets were freeze dried.

### 1.3. Non-microbial urease

Jack bean meal (Sigma Aldrich) was used as source of non-microbial urease for this study. 10g of jack bean meal was immersed in 50 ml of distilled water and put on a shaker for 4 hours. Afterwards, the suspension was poured over a paper filter. Finally, the filtrate was used for biodeposition experiments.

### 1.4. Submicron sized particles

### 1.4.1. CaCO₃

The procedure employed for the synthesis of citrate-stabilized CaCO₃ particles was based on the decomposition of urea at temperatures above 60°C. Modifying the surface of CaCO₃ particles *in situ* with citric acid and NH₄OH in aqueous solution resulted in irregular stick shaped particles with a diameter of 20-30 nm and a length of 100-300 nm. The fabrication of the particles was carried out in batches. For each batch, an aqueous solution of citric acid (5 g) was neutralized with aqueous ammonia solution. Calcium nitrate (4.72 g) and urea (12 g) were dissolved in distilled water. All the starting materials were of analytical grade and used without further purification. All the solutions were placed in a tightly closed round bottom flask. The total volume of the reaction solution was 500 ml. The reaction mixture was stirred continuously for 3 h at 90 °C and then allowed to cool to room temperature. The resulting nanoparticles were separated from the suspension by centrifugation. The powder was washed several times with ethanol and left to dry over night at 60°C. Afterwards, the particles were suspended in distilled water to obtain a concentration of 30 g.l⁻¹. From preliminary experiments, it was noticed that for this type of nanoparticles, application of solutions with concentrations higher than 2.5 g.l⁻¹ resulted in clogging of the surface. Therefore, the working concentration of CaCO₃ particles used in this study was 2.5 g.l⁻¹. For applications in practice, this concentration should be much higher. Currently, we're optimizing the stability of the nanoparticles for this purpose.

### 1.4.2. SiO₂

The silicon dioxide nanoparticles solutions used in this study were commercially available and used as such. Dispercoll S3030 and S5005 (Bayer Material Science) have particles sizes of 9 and 55 nm, respectively. Dispercoll solutions consists of anionic amorphous silicon dioxide.

### 1.4.2. Ca(OH)₂

Calosil (nanolime in ethanol, IBZ Freiberg) with a lime content of 50 g.L⁻¹ was used for this study.

### 1.5. Conventional consolidant

A TEOS based consolidant was selected for this study in order to allow for a comparison between the performance of the new biodeposition treatment and that of a conventional consolidant. The concentration of active compounds was more than 95% (weight).

### 2.Methods

### 2.1. Surface treatments

All surface treatments were carried out in a climatized room at 20°C and 65% R.H. After the final treatment step, the stones were left to dry at 20°C and 65%R.H.. As soon as the weight loss over a 24 h time interval was less than 0.1%, the stones were subjected to drying in an oven at 80°C until constant weight. They were cooled down at ambient temperature (20°C and 65% R.H.) prior to the water absorption and drilling resistance tests.

### 2.1.1. Biodeposition treatment with microbial urease

In a first series of tests, the treatment was applied in two steps. First, 125 ml of a one day old culture of *B*. *sphaericus* was poured on the surface. After one hour, an equal amount of a solution containing urea and calcium chloride was applied to the surface. The concentrations of urea and calcium chloride (equimolar) inside the solution used in the second step are presented in Table 1. In order to obtain the concentrations present inside the stone, these values need to be divided by two. The total amount of liquid applied (250 ml) corresponds to a theoretical penetration depth of about 5 cm for the stone used in this study, supposing a complete filling of the pores in the treated zone. The dosages (kg.m⁻³) mentioned in Table 1 correspond to the amount of CaCO₃ to be precipitated in this first 5 cm. For the 90 and 120 kg.m⁻³ treatments, the time between successive applications was 1 week. All treatments were applied in triplicate (n=3).

In a second test, 62.5 ml of centrifuged *B*. *sphaericus* resuspended in saline (7 g.l⁻¹ CaCl₂.2H₂O) was poured on the stone followed by 62.5 ml of a 2 M urea and calcium chloride solution. This was repeated one day later (*B. sphaericus* (liquid culture) series).

In a third test, 0.4 g freeze dried *Sp. pasteurii* powder was resuspended in 250 ml of a 1 M urea and calcium chloride solution and immediately poured on the surface of the stone after mixing (*Sp pasteurii* (freeze dried cells) series).

### 2.1.2. Biodeposition treatment with non-microbial urease

The jack bean meal filtrate (50 ml) was mixed together with a 2 M urea and calcium chloride solution (50 ml) prior to application on the stone. The resulting solution (100 ml) was applied to the stone by pouring. One stone was treated one time (Urease (1x) 40 kg/m³) while another stone was treated four times, i.e. four applications of 100 ml in four subsequent days (Urease (4x) 80 kg/m³).

### 2.1.3. Biodeposition treatments with submicron sized particles

### 2.1.3.1. CaCO₃

The CaCO₃ particles suspensions were applied at 20°C and 65% R.H. by pouring prior to the bacteria and CaCO₃ precursors. Every Monday and Friday, 250 ml of a 2.5 g.l⁻¹ solution of CaCO₃ particles was applied to the surface until the desired content was reached (Table 2). After each application of the CaCO₃ particles, the specimens were dried at 47°C to speed up the evaporation of water. One week after the last application of the CaCO₃ particles, the biodeposition treatment was applied as described in 2.1. The concentrations of urea and calcium chloride were adjusted in accordance to the amount of CaCO₃ particles applied to the surface.

### 2.1.3.2. SiO₂

The SiO₂ particles suspensions were applied at 20°C and 65% R.H. by pouring prior to the application of the bacteria and/or CaCO₃ precursors. Depending on the type of experiment, 50, 100, 150 or 250 ml of nanoparticles suspension was applied to the stone in one single treatment step. Before application of the bacteria and/or CaCO₃ precursors, the stones were left to dry at 20°C and 65% R.H. until the change in weight was less than 0.1% in a 24 hour time interval.

Two control series were included, i.e. one series containing nanoparticles (s3030 100 ml and s5005 100ml) and one series containing nanoparticles and CaCO₃ precursors (s3030 100 ml N and s5005 100ml N). The volume of the CaCO₃ precursors solution (1 M urea and calcium chloride) applied was identical to that of the nanoparticles (e.g. 100 ml). For the series containing nanoparticles, bacteria and CaCO₃ precursors, the volume of bacterial and CaCO₃ precursors solution (2 M urea and calcium chloride) applied was half the amount of the nanoparticles solution (e.g. 50 ml of bacteria and 50 ml of CaCO₃ precursors for the stones previously treated with 100 ml of nanoparticles).

### 2.1.4 Conventional surface treatment

The TEOS based consolidant was applied by pouring (250 ml). Afterwards, the specimens were subjected to the same drying procedures as other series, i.e. drying at 20°C and 65% R.H. followed by drying in an oven at 80°C.

### 2.1.5 Removal of ammonium by means of calcium hydroxide nanoparticles

In order to test the effectiveness of calcium hydroxide nanoparticles as a way to remove ammonium from the stone, known amounts of a 1M ammonium chloride solution (100, 150 and 250 ml) were introduced to the stones by pouring. For each amount of ammonium chloride, 2 stones were treated, i.e. a reference specimen and a treatment specimen (i.e. specimen that was treated later on with nanoparticles). Next, the stones were left to dry at 20°C and 65%R.H.. As soon as the weight loss over a 24 h time interval was less than 0.1%, the stones were subjected to drying in an oven at 80°C until constant weight. Subsequently, the treatment specimens were stored at 20°C and 65% R.H. and treated with Calosil E50 (NP series), the amount of liquid being equal to the amount of ammonium chloride solution applied (e.g. 100 ml for the stones that had been treated with 100 ml of ammonium chloride). Afterwards, they were subjected to the drying procedure described above.

Finally, both control and treatment specimens were cut into 1 or 2 cm slices and crushed by means of a hammer. The slices were wrapped inside plastic film in order to prevent loss of stone powder. After weighing, the stone powders from each slice were immersed into 250 ml of milliQ water and put on a shaker for 24 hours. The concentration of ammonium inside the water solution was determined by means of ion chromatography.

### 2.2 Weight increase due to surface treatments

The weight gain was calculated from the difference in weight before and after treatment, after drying at 80°C until constant weight (average weight before treatment was 1.3 kg).

### 2.3. Capillary water absorption

The protective effect of the surface treatments was investigated by means of a sorptivity test. Determination of the water absorption by capillarity was performed on two specimens per type of treatment according to EN 1925:1999. Prior to the test, the stones were dried in an oven at 80°C, until a constant weight was obtained. The sorptivity (water uptake rate) coefficient was calculated from the slope of the linear curve presenting the amount of water absorbed per unit of surface and the square root of time.

### 2.4. Drilling resistance measurements

The strengthening effect was measured by means of the drilling resistance measurement system (DRMS Cordless SINT Technology, Italy). The system is equipped with a software program allowing the continuous recording and monitoring of the drilling resistance in relation to the advancement of the drill bit. For this study, a rotation speed of 600 rpm and a penetration speed of 40 mm.min⁻¹ were used. DRMS tests were performed using drill bits with 4.8 mm diameter allowing a maximum penetration depth around 3 cm. The results of the DRMS measurements are expressed as differential hardness profiles, obtained by subtracting the drilling forces measured after treatment with those measured before treatment (i.e. an untreated stone). For each type of treatment, 3 drilling measurements were carried out on one stone from which the average hardness profile was calculated.

### 3. Results

### 3.1 Biodeposition treatment with microbial urease

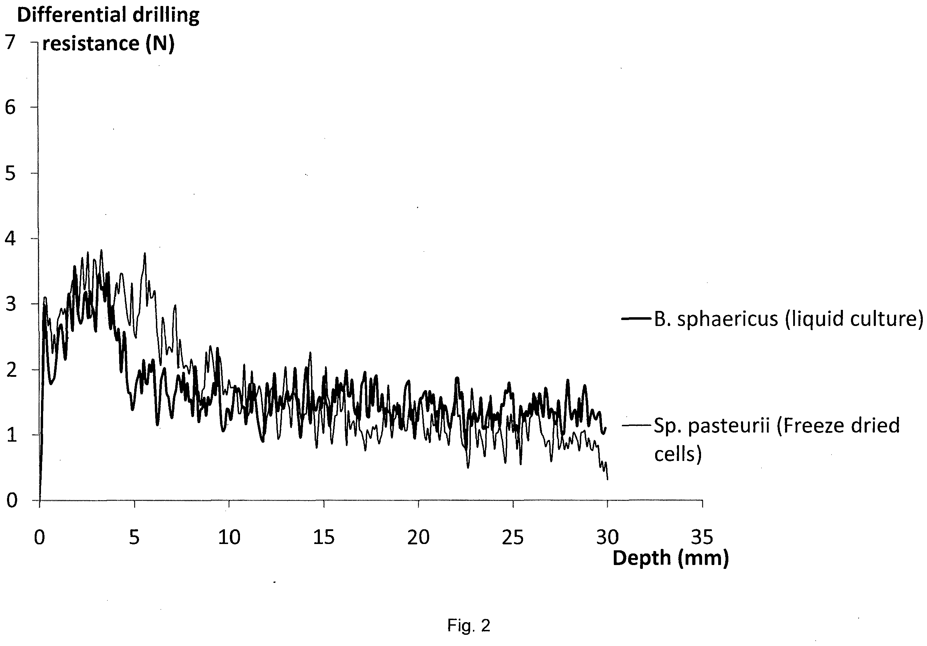

The biodeposition treatments with microbial urease resulted in a weight gain of all stones, the weight increase being proportional to the concentration of CaCO₃ precursors applied (Table 1). Treatments with a lower amount of calcium precursors resulted in the formation of a very hard superficial layer, i.e. an increase in the drilling resistance of about 612% and 774% up to a depth of 5 mm for the 30 kg.m⁻³ and the 60 kg.m⁻³ series, respectively (Table 1). On the contrary, the consolidation action of biodeposition treatments with a higher amount of calcium precursors, that were applied over two weeks, was more pronounced at higher depths, i.e. an increase in the drilling resistance of about 542% and 1008% at depths between 20 and 30 mm for the 90 kg.m⁻³ and 120 kg.m⁻³ series, respectively. Similar strengthening was obtained with a biodeposition treatment with centrifuged *B*. *sphaericus* and a biodeposition treatment with freeze dried *Sp. pasteurii* (Fig. 2).

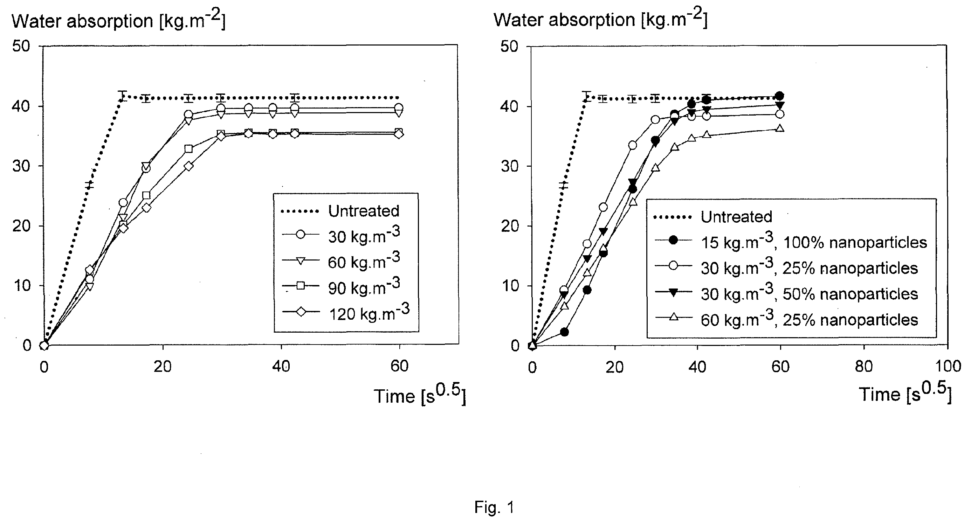

The biodeposition treatment resulted in a decreased rate of water uptake (Fig. 1 and Table 1), the highest decrease in water absorption being observed for the 90 kg.m⁻³ and the 120 kg.m⁻³ treatments.

**Table 1. Influence of the dosage of CaCO₃ precursors on the weight gain, decrease in sorptivity (S) and strength increase of Maastricht limestone treated with B. sphaericus culture liquid.**

| **Treatment** | **CaCO₃ per pore volume (%)*** | **Concentration of precursors applied (M)** | | **Weight gain (g)** | **S↓ (%)** | **Increase of resistance (%)** | | | | |
|---|---|---|---|---|---|---|---|---|---|---|
| | | *Week 1* | *Week 2* | | | *0-5 mm* | *5-10 mm* | *10-20 mm* | *20-30 mm* | *0-**30 mm*** |
| 30 kg.m⁻³ | 2 | 1.2 | | 25 | 47 | 612 | 52 | 14 | 41 | **126** |
| 60 kg.m⁻³ | 4 | 2.4 | | 45 | 52 | 774 | 0 | 38 | 139 | **192** |
| 90 kg.m⁻³ | 6 | 1.2 | 2.4 | 62 | 52 | 245 | 145 | 361 | 542 | **375** |
| 120 kg.m⁻³ | 8 | 2.4 | 2.4 | 84 | 53 | 296 | 62 | 265 | 1008 | **506** |

| | | | | | | | | | | |
|---|---|---|---|---|---|---|---|---|---|---|
| * for a density of CaCO₃ of 2710 kg.m⁻³ and a stone porosity of 47% | | | | | | | | | | |

### 3.2 Biodeposition treatment with non-microbial urease

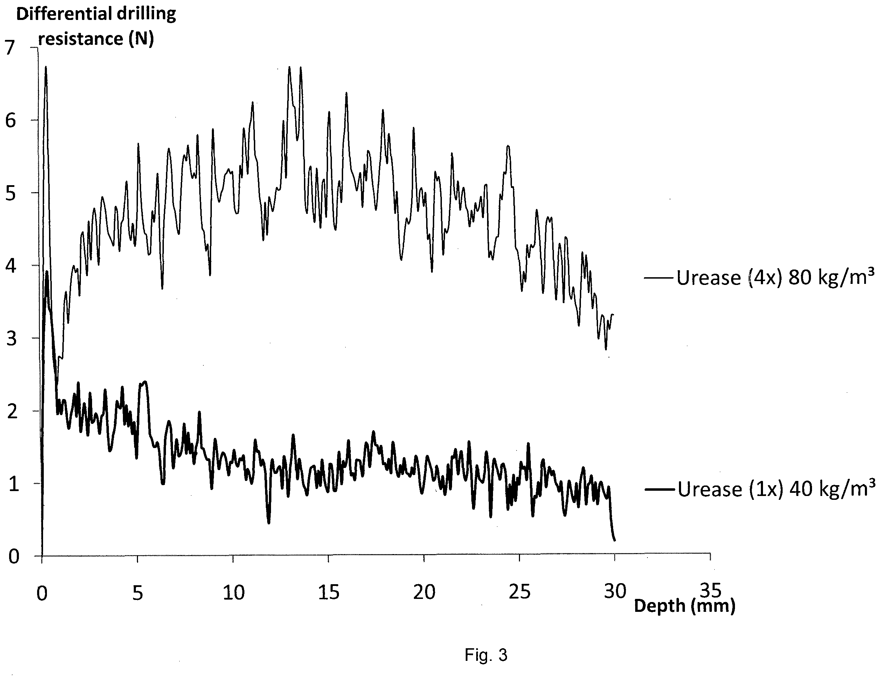

The surface treatments with non-microbial urease resulted in an increased hardness of limestone, the degree of strengthening being dependent on the amount of material deposited (see Fig. 3). The treatment that was applied in one step and that resulted in a weight increase of 40 g (i.e. Urease (1x) 40 kg/m³) showed an increase in hardness of about 1-2 N up to 30 mm depth compared to the reference. The treatment that was applied in four steps and that resulted in a weight increase of 80 g (i.e. Urease (4x) 80 kg/m³) .

### 3.3 Biodeposition treatment with submicron sized particles

### 3.3.1. CaCO₃

In the absence of microorganisms, urea and salts, CaCO₃ particles did not exert a high strength increase (6-84%, for the 15 kg.m⁻³ 100% nanoparticles series, Table 2). On the other hand, for the stones that were treated with microorganisms, urea and calcium salts, replacement of a part of the calcium carbonate precursors by CaCO₃ particles improved the strengthening distribution. For the 30 kg.m⁻³ and 60 kg.m⁻³ biodeposition treatments, a 25% replacement of CaCO₃ precursors by CaCO₃ nanoparticles resulted in the disappearance of the superficial strength peak. Instead, a more homogeneous strengthening was obtained with much higher strength increases between 5-30 mm (110-193%, Table 2) compared to treatments without nanoparticles (0-139%, Table 1). Among the different beneficial actions, CaCO₃ particles may act as a filler which enhance the strengthening effect of the biogenic carbonate that binds the nanoparticles and the loose limestone grains. In case 50% of the CaCO₃ precursors was replaced by nanoparticles for the 30 kg.m⁻³ treatment, the overall strength increase between 0-30 mm amounted 146% compared to 126% in the absence of the particles (Table 1 and 2).

**Table 2. Influence of the replacement level of CaCO₃ precursors by CaCO₃ nanoparticles on the weight gain, decrease in sorptivity (S) and strength increase of biodeposition treated specimens.**

| **Treatment** | **Replacement level (%)** | **Weight gain (g)** | **S↓ (%)** | **Increase of resistance (%)** | | | | |
|---|---|---|---|---|---|---|---|---|
| | | | | *0-5 mm* | *5-10 mm* | *10-20 mm* | *20-30 mm* | ***0-30 mm*** |
| 15 kg.m⁻³ | 100 | 2 | 66 | 69 | 6 | 11 | 84 | **44** |
| 30 kg.m⁻³ | 25 | 29 | 58 | 251 | 110 | 131 | 193 | **168** |
| | 50 | 18 | 65 | 411 | 84 | 64 | 128 | **146** |
| 60 kg.m⁻³ | 25 | 51 | 70 | 246 | 136 | 123 | 186 | **167** |

The treatments for which a part of the calcium carbonate precursors had been replaced with calcium carbonate particles, resulted in a lower water absorption rate compared to treatments without these particles (Fig. 1).

### 3.3.2. SiO₂

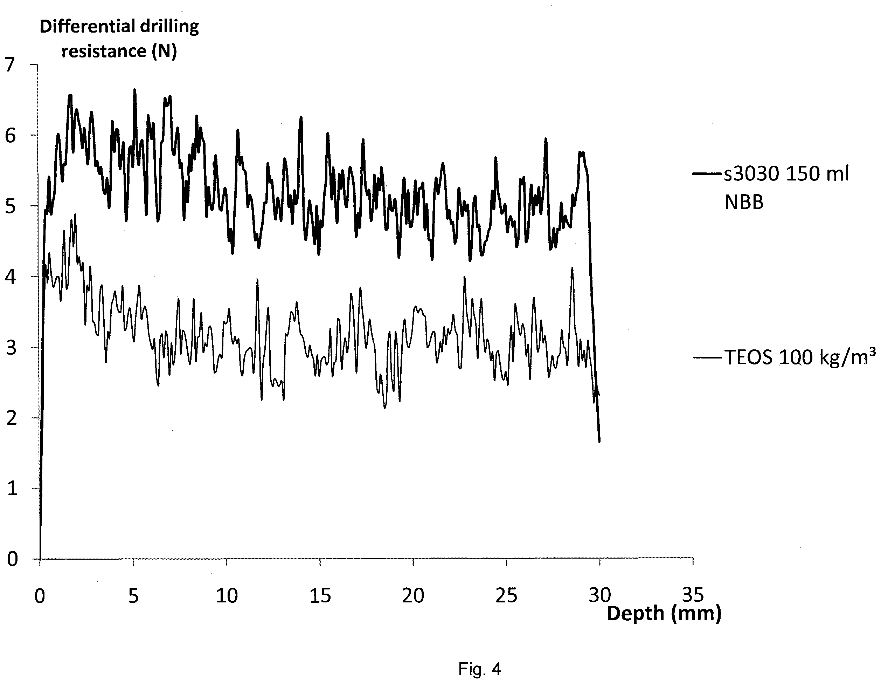

The highest overall strengthening was observed for an ureolytic treatment with the addition of nanoparticles (s3030 150 ml NBB) (Fig. 4). The strengthening was even higher than that obtained with the conventional TEOS based consolidant. The weight gain obtained with this treatment (i.e. 70 g corresponding with 70 kg/m³) can be roughly attributed to the presence of nanoparticles (80%), CaCO₃ (10%) and NH₄Cl (10%). Note that for a similar strengthening with the Urease (4x) 80 kg/m³ treatment about 40 g of NH₄Cl (i.e. about 50% of the weight gain) is deposited within the stone. As such, the addition of nanoparticles not only leads to an increased strengthening but also in a decreased salt load, which lowers the possibility of salt damage.

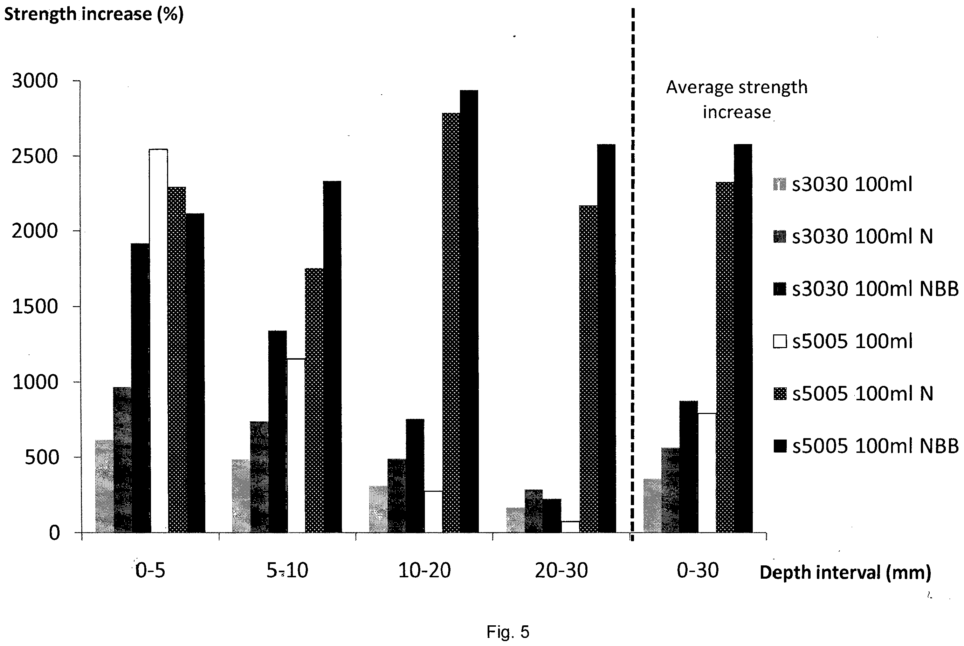

One of the parameters affecting the performance of the submicron sized particles is the diameter of the particles used (Figure 5). Particles with a diameter of about 55 nm (S5005 series) were observed to exhibit a higher strengthening compared to particles with a diameter of about 9 nm (S3030 series). The combined use of nanoparticles, CaCO₃ precursors and bacteria (100 ml NBC series) resulted in a higher strength increase compared to the sole use of nanoparticles (100 ml) or the combination of nanoparticles and CaCO₃ precursors (100 ml N) (Figure 5).

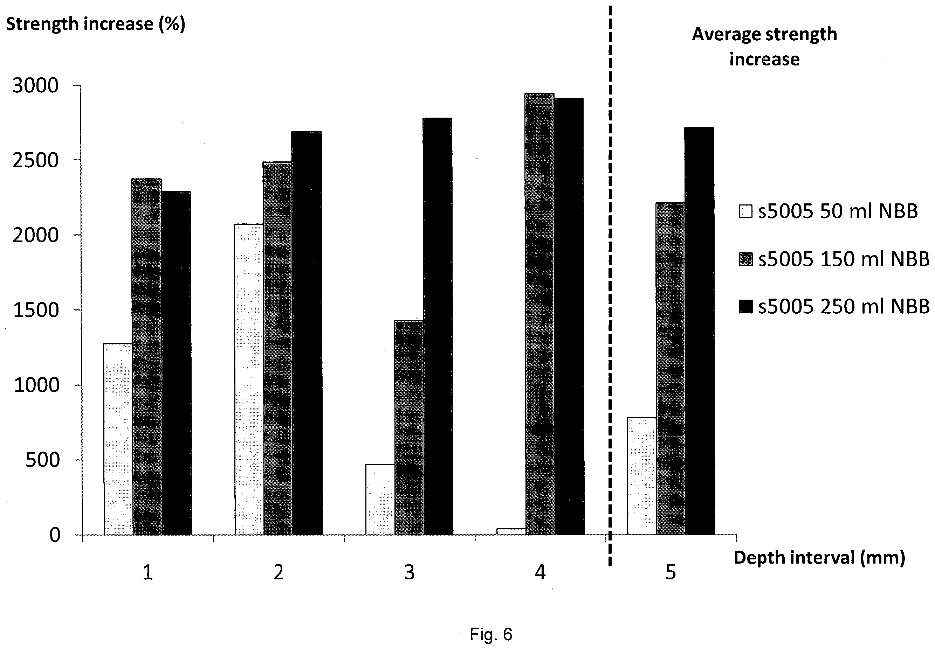

For the same amount of bacteria and CaCO₃ precursors used, a higher strength increase can be obtained with higher amounts of nanoparticles (Figure 6). Stones treated with 150 ml of S5005 (S5005 NBB 150) exhibited a much higher strength increase compared to stones treated with 50 ml of S5005 (S5005 NBB 50). The differences in strength increase between stones treated with 150 and 250 ml of S5005 (S5005 NBB 250) were much smaller, the highest strength being obtained with 250 ml of nanoparticles.

### 3.4. Removal of ammonium by means of calcium hydroxide nanoparticles

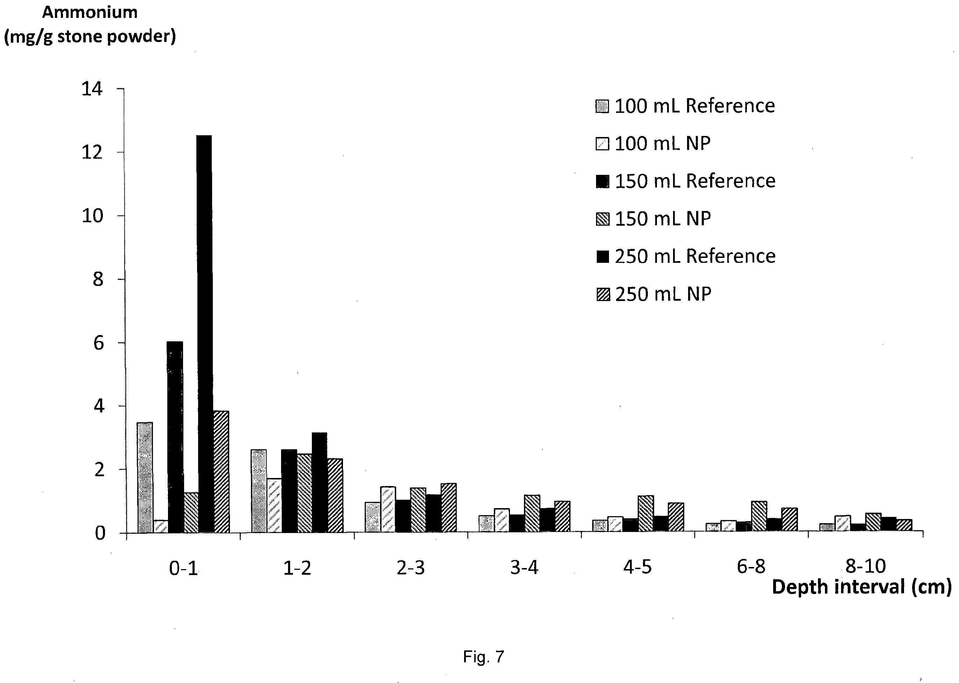

Alkaline nanoparticles can be used as a post-treatment to remove ammonium from the stone which is present due to the hydrolysis of urea. Upon reaction with the hydroxyl ions, ammonium is converted to ammonia which evaporates from the stone. The addition of calcium hydroxide nanoparticles (NP) to stones that had been previously treated with 100 ml, 150 ml and 250 ml of 1M NH₄Cl solution resulted in a 30%, 14% and 46% decrease in total ammonium, respectively, the effect being most pronounced to the outer surface (first two centimeters; Figure 7).

### 4.. Conclusions

It is clear that the application procedure and the dosage of submicron sized particles, urease and CaCO₃ precursors has an important influence both on the protective and consolidation effects of a biodeposition treatment. We demonstrated for the first time that consolidation by biodeposition can be achieved at depths up to 30 mm and more, which is much higher than values reported so far (i.e. 2-5 mm). The combined use of submicron sized particles, urease (microbial and/or non-microbial) and carbonate precursors allows for a greater strengthening effect with smaller amounts of products being introduced to the stone compared to treatments where not all of these components were present (e.g. submicron sized particles and carbonate precursors or bacteria and carbonate precursors). Compared to ureolytic biodeposition treatments described in literature so far, the current invention results in a large decrease of the amount of ammonium introduced to the stone, and hence, decreases the possibility of salt damage in the short or long run.

### References

Al-Thawadi, S., R. Cord-Ruwisch, et al. (2011). "Strength Formation by Nanoparticles of Calcite after Concentrating Ureolytic Bacteria In-situ." AIP Conference Proceedings 1400: 258-261261.
Ataee, R. A., J. Derakhshanpour, et al. (2011). "Antibacterial effect of calciumm carbonate nanoparticles on agrobacterium tumefaciens." Journal of military medicine 13(2): 65-70.
Castanier, S., G. Le Metayer-Levrel, et al. (1999). "Ca-carbonates precipitation and limestone genesis -- the microbiogeologist point of view." Sedimentary Geology 126(1-4): 9-23.
de Ferri, L., P. P. Lottici, et al. (2011). "Study of silica nanoparticles - polysiloxane hydrophobic treatments for stone-based monument protection." Journal of Cultural Heritage 12(4): 356-363.
De Muynck, W., N. De Belie, et al. (2010). "Microbial carbonate precipitation in construction materials: A review." Ecological Engineering 36(2): 118-136.
De Muynck, W., S. Leuridan, et al. (2011). "Influence of pore structure on the effectiveness of a biogenic carbonate surface treatment for limestone conservation." Applied and Environmental Microbiology 77(19): 6808-6820.
De Muynck, W., K. Verbeken, et al. (2010). "Influence of urea and calcium dosage on the effectiveness of bacterially induced carbonate precipitation on limestone." Ecological Engineering 36(2): 99-111.
Dick, J., W. De Windt, et al. (2006). "Bio-deposition of a calcium carbonate layer on degraded limestone by Bacillus species." Biodegradation 17(4): 357-367.
Giorgi, R., L. Dei, et al. (2000). "A New Method for Consolidating Wall Paintings Based on Dispersions of Lime in Alcohol." Studies in Conservation 45(3): 154-161.
Hammes, F. and W. Verstraete (2002). "Key roles of pH and calcium metabolism in microbial carbonate precipitation." Reviews in Environmental Science and Biotechnology 1: 3-7.
Jimenez-Lopez, C., F. Jroundi, et al. (2008). "Consolidation of quarry calcarenite by calcium carbonate precipitation induced by bacteria activated among the microbiota inhabiting the stone." International Biodeterioration & Biodegradation 62(4): 352-363.
Jimenez-Lopez, C., C. Rodriguez-Navarro, et al. (2007). "Consolidation of degraded ornamental porous limestone stone by calcium carbonate precipitation induced by the microbiota inhabiting the stone." Chemosphere 68(10): 1929-1936.
Jroundi, F., A. Fernandez-Vivas, et al. (2010). "Bioconservation of Deteriorated Monumental Calcarenite Stone and Identification of Bacteria with Carbonatogenic Activity." Microbial Ecology 60(1): 39-54.
Kim, E. K., J. Won, et al. (2009). "Effects of silica nanoparticle and GPTMS addition on TEOS-based stone consolidants." Journal of Cultural Heritage 10(2): 214-221.
Kottegoda, N., Munaweera, I., Madusanka, N., Karunaratne, V. (2011). "A green slow-release fertilizer composition based on urea-modified hydroxyapatite nanoparticles encapsulated wood." Current Science 101(1): 73-78.
Larson, J. H., C. Madden, et al. (2000). "Ince Blundell: the preservation of an important collection of classical sculpture." Journal of Cultural Heritage 1(1001): 79-87.
Larson, M. U., M. Seward, et al. (2009). "Biocompatible nanoparticles trigger rapid bacteria clustering." Biotechnology Progress 25(4): 1094-1102.
Le Metayer-Levrel, G., S. Castanier, et al. (1999). "Applications of bacterial carbonatogenesis to the protection and regeneration of limestones in buildings and historic patrimony." Sedimentary Geology 126(1-4): 25-34.
Liang, Z., C. Wang, et al. (2005). "Bio-catalytic nanoparticles with urease immobilized in multilayer assembled through layer-by-layer technique." Reactive and Functional Polymers 63(1): 85-94.
Luo, P. G., T.-R. Tzeng, et al. (2005). "Quantitative Analysis of Bacterial Aggregation Mediated by Bioactive Nanoparticles." Journal of Biomedical Nanotechnology 1(3): 291-296.
Miliani, C., M. L. Velo-Simpson, et al. (2007). "Particle-modified consolidants: A study on the effect of particles on sol-gel properties and consolidation effectiveness." Journal of Cultural Heritage 8(1): 1-6.
Rodriguez-Navarro, C., M. Rodriguez-Gallego, et al. (2003). "Conservation of ornamental stone by Myxococcus xanthus induced carbonate biomineralization." Applied and Environmental Microbiology 69(4): 2182-2193.
Slížková, Z., M. Drdácký, et al. (2010). Consolidation of porous limestone with suspensions of calcium hydroxide nano-particles in alcohols. Workshop Recent progress in the consolidation of calcareous materials.
Tiano, P., E. Cantisani, et al. (2006). "Biomediated reinforcement of weathered calcareous stones." Journal of Cultural Heritage 7(1): 49-55.
Venegas, S. C., J. M. Palacios, et al. (2006). "Calcium Modulates Interactions between Bacteria and Hydroxyapatite." Journal of Dental Research 85(12): 1124-1128.

## Claims

1. A method for improving the durability of limestone comprising the steps of providing at least once said limestone with submicron sized calcium carbonate particles , urease, urea and calcium salts in order to obtain a deposition of calcium carbonate and submicron sized particles on and inside said limestone.

2. A method according to claim 1 wherein said urease is a microbial urease, a non-microbial urease or a combination of a microbial urease and a non-microbial urease.

3. A method according to any of claims 1-2, wherein said provision of said submicron sized particles, urease, urea or calcium salts is followed by a drying period.

4. A method according to claims 1-3, wherein said submicron sized particles are dosed in such a way that they maximally account for 95% of the weight of the materials deposited inside said limestone.

5. A method according to claims 2-4 wherein said microbial urease is present in the ureolytic microorganism *Bacillus sphaericus* or *Sporsarcina pasteurii.*

6. A method according to claims 2-4 wherein said non-microbial urease is found in plants, invertebrates or vertebrates.

7. A method according to claim 6 wherein said non-microbial urease found in plants is present in Jack bean meal extract.

8. A method according to claim 1-7 wherein calcium hydroxide nanoparticles are applied to said porous materials after said calcium salts have been converted into microbial produced carbonate.

## Patentansprüche

1. Verfahren zur Verbesserung der Beständigkeit von Kalkstein, umfassend die Schritte des wenigstens einmaligen Versetzen des Kalksteins mit Calciumcarbonatpartikeln mit einer Größe im Submikrometerbereich, Urease, Harnstoff und Calciumsalzen, um eine Ablagerung von Calciumcarbonat und Partikeln mit einer Größe im Submikrometerbereich auf und in dem Kalkstein zu erreichen.

2. Verfahren nach Anspruch 1, wobei es sich bei der Urease um eine mikrobielle Urease, eine nichtmikrobielle Urease oder eine Kombination einer mikrobiellen Urease und einer nichtmikrobiellen Urease handelt.

3. Verfahren nach einem der Ansprüche 1-2, wobei sich an die Bereitstellung der Partikel mit einer Größe im Submikrometerbereich, der Urease, des Harnstoffs bzw. der Calciumsalze eine Trocknungsperiode anschließt.

4. Verfahren nach Anspruch 1-3, wobei die Partikel mit einer Größe im Submikrometerbereich so dosiert werden, dass sie maximal 95% des Gewichts der in dem Kalkstein abgelagerten Materialien ausmachen.

5. Verfahren nach Anspruch 2-4, wobei die mikrobielle Urease im ureolytischen Mikroorganismus *Bacillus sphaericus* oder *Sporsarcina pasteurii* vorliegt.

6. Verfahren nach Anspruch 2-4, wobei die nichtmikrobielle Urease bei Pflanzen, Invertebraten oder Vertebraten angetroffen wird.

7. Verfahren nach Anspruch 6, wobei die bei Pflanzen angetroffene nichtmikrobielle Urease in Schwertbohnenmehlextrakt vorhanden ist.

8. Verfahren nach Anspruch 1-7, wobei Calciumhydroxid-Nanopartikel auf die porösen Materialien aufgebracht werden, nachdem die Calciumsalze in mikrobielles produziertes Carbonat umgewandelt wurden.

## Revendications

1. Procédé d'amélioration de la durabilité d'une pierre calcaire, comprenant les étapes qui consistent à apporter au moins une fois à ladite pierre calcaire des particules de carbonate de calcium de taille submicronique, une uréase, de l'urée et des sels de calcium, afin d'obtenir un dépôt de carbonate de calcium et de particules de taille submicronique sur et à l'intérieur de ladite pierre calcaire.

2. Procédé selon la revendication 1, dans lequel ladite uréase est une uréase microbienne, une uréase non microbienne, ou une combinaison d'une uréase microbienne et d'une uréase non microbienne.

3. Procédé selon l'une quelconque des revendications 1 et 2, dans lequel ledit apport desdites particules de taille submicronique, de ladite uréase, de ladite urée ou desdits sels de calcium est suivi d'une période de séchage.

4. Procédé selon les revendications 1 à 3, dans lequel lesdites particules de taille submicronique sont dosées de manière telle qu'elles représentent au maximum 95 % du poids des matériaux déposés à l'intérieur de ladite pierre calcaire.

5. Procédé selon les revendications 2 à 4, dans lequel ladite uréase microbienne est présente dans le microorganisme uréolytique *Bacillus sphaericus* ou *Sporsarcina pasteurii.*

6. Procédé selon les revendications 2 à 4, dans lequel ladite uréase non microbienne se trouve dans des végétaux, des invertébrés ou des vertébrés.

7. Procédé selon la revendication 6, dans lequel ladite uréase non microbienne que l'on trouve dans des végétaux est présente dans l'extrait de farine de haricot sabre.

8. Procédé selon les revendications 1 à 7, dans lequel des nanoparticules d'hydroxyde de calcium sont appliquées sur lesdits matériaux poreux après que lesdits sels de calcium ont été convertis en carbonate produit par une activité microbienne.
